# EUROPÄISCHE PATENTSCHRIFT

(11) **EP 1 904 327 B1**
(45) Veröffentlichungstag und Bekanntmachung des Hinweises auf die Patenterteilung: **01.05.2013**
(21) Anmeldenummer: 06791296.4
(22) Anmeldetag: 13.07.2006
(51) Int. Cl.: B60J 7/14

(54) **VERSTELLVORRICHTUNG EINES VERDECKKASTENDECKELS EINES CABRIOLETS**
ADJUSTING MECHANISM OF A SOFT TOP COMPARTMENT COVER OF A CONVERTIBLE
DISPOSITIF DE DEPLACEMENT D'UN COUVERCLE DE COMPARTIMENT A CAPOTE D'UN CABRIOLET

(30) Priorität: 14.07.2005 DE 102005033599
(43) Veröffentlichungstag der Anmeldung: 02.04.2008
(73) Patentinhaber: Webasto AG, 82131 Stockdorf (DE)
(72) Erfinder: WEGENER, Fritz, 82205 Gilching (DE)
(74) Vertreter: Konnerth, Dieter Hans
(86) Internationale Anmeldenummer: PCT/DE2006/001213
(87) Internationale Veröffentlichungsnummer: WO 2007/006294

(56) Entgegenhaltungen:
- EP-A1- 1 247 676
- DE-A1- 10 108 493
- DE-A1- 10 116 094
- DE-C1- 4 445 944

## Beschreibung

Die Erfindung betrifft eine Verstellvorrichtung eines bewegbaren Bauteils, insbesondere eines Verdeckkastendeckels eines Cabriolets, das mittels zumindest eines karosserieseitig angelenkten Lenkers bewegbar gelagert ist, wobei zwischen dem Lenker und einer Antriebseinheit der Verstellvorrichtung ein Kreuzlenkergetriebe zwischengeschaltet ist.

Aus der DE 44 45 944 C1 ist eine Verstellvorrichtung für eine Heckklappe bekannt geworden, die auch einen Verdeckkastendeckel bildet. Ein karosserieseitig abgestützter Hydraulikzylinder verschwenkt einen den Verdeckkastendeckel tragenden Hilfsrahmen um eine rückseitige Lagerung. Bei der anfänglichen Öffnungsbewegung aus der Schließstellung bewirkt die Bewegung des Hydraulikzylinders eine entsprechend hohe Bewegungsgeschwindigkeit des Verdeckkastendeckels. Diese hohe Geschwindigkeit ist insbesondere auf dem letzten Schließweg unerwünscht, in dem der Verdeckkastendeckel ebenfalls mit hoher Geschwindigkeit in die Endstellung bewegt wird.

Die gattungsgemäβe DE 101 16 094 C2 offenbart ein bewegbares Fahrzeugdach, dessen Lagereinrichtung einen Hauptlenker umfasst, der an einem karosserieseitigen Drehgelenk schwenkbar gelagert ist. Ein gleichfalls um das Drehgelenk schwenkbarer Dachlenker ist mit dem Hauptlenker drehfest gekoppelt und über zwei in Kreuzlenkeranordnung angekoppelte Kreuzlenker mit einer Antriebseinrichtung verbunden. Mittels der Kreuzlenkeranordnung soll ein verbesserter Bewegungsablauf beim Öffnen und Schließen des Fahrzeugdaches erzielt werden. Die direkte Ankopplung des Dachlenkers an den Hauptlenker schränkt jedoch eine Optimierung des Bewegungsablaufs ein.

Der Erfindung liegt die Aufgabe zugrunde, eine eingangs genannte Verstellvorrichtung zu schaffen, die einen verbesserten Bewegungsablauf aufweist.

Die Aufgabe wird bei der eingangs genannten Verstellvorrichtung erfindungsgemäß dadurch gelöst, dass der Lenker über eine Koppelstange mit einer drehbar gelagerten Kurbel gekoppelt ist, die über zwei Kreuzlenker mit einem von der Antriebseinheit bewegbaren Antriebslenker verbunden ist. Die Koppelstange ermöglicht eine Anpassung der Bewegungsübersetzung zwischen der Kurbel und dem das Bauteil lagernden Lenker. Durch eine entsprechende Anordnung und Auslegung der Koppelstange kann eine anfänglich hohe Stellbewegungsgeschwindigkeit der Kurbel bzw. der Antriebseinheit in eine niedrige Geschwindigkeit am Hauptlenker umgewandelt werden. Das bewegbare Bauteil kann ein Verdeckkastendeckel eines Cabriolets, ein den Verdeckkastendeckel tragender Rahmen, ein umwandelbares Hardtop- oder Softtopdach eines Cabriolets oder auch ein anderes Teil eines Fahrzeugs oder Cabriolets sein, das z. B. mittels eines schwenkbar gelagerten Lenkers bewegbar und in zwei Endstellungen verstellbar ist.

Vorteilhafte Ausgestaltungen der Erfindung sind in den Unteransprüchen angegeben.

Zweckmäßigerweise ist die Kurbel um einen Drehwinkel von etwa 180° verschwenkbar. Dieser Drehwinkel kann durch die Kreuzlenkeranordnung in kinematisch günstiger Weise erreicht werden. Der Drehwinkel kann jedoch auch größer oder kleiner gewählt werden. Des weiteren ist es vorteilhaft, wenn die Kurbel zwischen den beiden Anlenkstellen der Kreuzlenker drehbar gelagert ist und einen seitlich abstehenden Arm aufweist, an dem die Koppelstange angelenkt ist. Durch die Wahl der Länge des Armes bzw. des Abstandes der Anlenkstelle von der Drehachse der Kurbel kann das Bewegungsverhalten der Kinematik ebenfalls eingestellt und abgestimmt werden.

Besonders bevorzugt ist es, wenn in der einen Endstellung, z. B. einer Schließstellung einer Klappe, eines Verdeckkastendeckels oder eines Dachbauteils, und/oder in der anderen Endstellung des Bauteils, z. B. der Offenstellung des genannten Bauteils, die Koppelstange und die Kurbel in einer Totpunktstellung angeordnet sind, in der die Kurbel ihre Position beibehält, wenn eine Kraft von dem Bauteil auf die Koppelstange eingeleitet wird. Dabei kann in Schließstellung die Koppelstange gegenüber der Kurbel auch in einer Übertotpunktstellung, insbesondere etwa 2° bis 3° über die Totpunktstellung hinaus, angeordnet sein, um eine sichere Verriegelung des Kinematik zu erzielen.

Eine sichere Abstützung der insbesondere linear wirkenden Antriebseinheit wird erreicht, wenn der Antriebslenker mit einem Schwinghebel gekoppelt ist, der an einem orts- oder karosseriefesten Lagerteil schwenkbar angelenkt ist. Die Antriebseinheit kann dann an dem Verbindungsgelenk des Antriebslenkers mit dem Schwinghebel oder auch an dem Antriebslenker oder an dem Schwinghebel abgestützt sein.

Vorzugsweise ist eine Hydraulikzylindereinheit als Antriebseinheit vorgesehen, die einerseits an dem Verbindungsgelenk zwischen dem Schwinghebel und dem Antriebslenker angreift und andererseits zumindest zeitweise ortsfest abgestützt ist. Jedoch können auch andere Antriebseinheiten wie z. B. pneumatische oder elektromechanische Antriebseinheiten vorgesehen sein.

Vorzugsweise ist somit die Verstellvorrichtung kinematisch derart ausgelegt, dass bei im wesentlichen gleichbleibender Antriebsgeschwindigkeit der Antriebseinheit nahe der beiden Endstellungen des Bauteils bzw. der Verstellvorrichtung der Lenker mit einer geringen Verstellgeschwindigkeit und dazwischen mit höherer Geschwindigkeit verschwenkt wird. Weiterhin kann die Antriebsgeschwindigkeit der Antriebseinheit auch variabel sein und geregelt werden, wodurch die Verstellgeschwindigkeit zusätzlich beeinflusst werden kann.

Wenn die Antriebseinheit bzw. die Hydraulikzylindereinheit andererseits mit einer Riegeleinrichtung zum Festlegen des Bauteils in einer Endstellung, insbesondere in einer Offenstellung, verbunden ist, kann sie bei ihrer anfänglichen Bewegung zunächst eine Entriegelungsbewegung ausführen und sie kann nach dem Ausführen der Entriegelungsbewegung riegelseitig ortsfest abgestützt sein. Die Abstützung kann dadurch erzielt werden, dass der Lenker eine Einrichtung wie z. B. eine Riegelkurve oder Blockierkulisse aufweist, die in Abhängigkeit von der Schwenkstellung des Lenkers eine Bewegung der Riegeleinrichtung blockiert. Die Riegelkurve ist z. B. als seitlich vorstehender Steg oder als Sektor eines Ringes gebildet, der insbesondere konzentrisch zur Schwenkachse des Lenkers angeordnet ist. Jedoch kann auch ein anderes Teil der Kinematik eine Riegeleinrichtung aufweisen oder ansteuern.

Nachfolgend wird die Verstellvorrichtung anhand eines Ausführungsbeispiels unter Bezugnahme auf die Zeichnung näher erläutert. Es zeigt:
- Fig. 1: in einer seitlichen Draufsicht eine Verstellvorrichtung eines in seiner Schließstellung angeordneten Verdeckkastendeckels eines Cabriolets;
- Fig. 2: in einer seitlichen Draufsicht die Verstellvorrichtung in einer ersten Zwischenstellung beim Öffnen des Verdeckkastendeckels;
- Fig. 3: in einer seitlichen Draufsicht die Verstellvorrichtung mit einem Rahmen eines Verdeckkastendeckels in einer zweiten Zwischenstellung beim Öffnen des Verdeckkastendeckels;
- Fig. 4: in einer seitlichen Draufsicht die Verstellvorrichtung in der in Fig. 3 gezeigten Zwischenstellung;
- Fig. 5: in einer Seitenansicht die Verstellvorrichtung in der in Fig. 4 gezeigten Zwischenstellung;
- Fig. 6: in einer seitlichen Draufsicht die Verstellvorrichtung in einer weiteren Zwischenstellung;
- Fig. 7: in einer seitlichen Draufsicht die Verstellvorrichtung in einer Endstellung bei geöffnetem Verdeckkastendeckel; und
- Fig. 8: ein Diagramm mit einem Übersetzungsverlauf zwischen einer Bewegung einer Antriebseinrichtung und einer dem zu verstellenden Bauteil zugeordnete Bewegung.

Ein Verdeckkastendeckel eines Cabriolet-Fahrzeugs (nicht dargestellt) ist an einem Rahmen 1 gelagert, der vor dem Ablegen des Klapp- oder Faltdaches in einen heckseitigen Verdeckablageraum nach hinten geschwenkt wird, so dass der daran festgelegte Verdeckkastendeckel mit seinem Vorderrand angehoben wird und eine Durchtrittsöffnung für das abzulegende Klapp- oder Faltdach, das insbesondere ein Hardtop-Dach oder auch ein Softtop sein kann, freigibt. Der Verdeckkastendeckel kann auch als Kofferraumdeckel dienen, indem er aus seiner Schließposition bei an der Karosserie festgelegtem Rahmen 1 mit seinem Hinterrand relativ zum Rahmen 1 bzw. der Karosserie hochgeschwenkt wird und damit eine Beladeöffnung des Kofferraums freigibt. In der DE 44 45 944 C1 ist ein derartiger Verdeckkastendeckel grundsätzlich offenbart, der über einen am Fahrzeugheck um eine karosseriefeste Schwenkachse verschwenkbar gelagerten Hilfsrahmen abgestützt ist.

Der Rahmen 1 des Verdeckkastendeckels ist beidseits an der Karosserie jeweils mittels eines Hauptlenkers 2 und eines Hilfslenkers 3, die ein Viergelenk mit den Gelenken 4 bzw. 5 am Rahmen 1 und den Gelenken 6 bzw. 7 an einer karosseriefesten Lagerplatte 8 bilden, schwenkbar gelagert. Der Rahmen 1 ist z. B. U-förmig entsprechend dem in der DE 44 45 944 C1 offenbarten Hilfsrahmen gestaltet.

Eine sich über das eine Lagerachse bildende Gelenk 6 hinaus erstreckende gekröpfte Verlängerung 9 des Hauptlenkers 2 ist endseitig in einem Gelenk 10 mit einer Koppelstange 11 verbunden, die wiederum in einem Gelenk 12 mit einem seitlich abstehenden Arm 13 einer in etwa T-förmigen Kurbel 14 schwenkbar angelenkt ist. Die Kurbel 14 ist an der Lagerplatte 8 in einer Drehachse 15 schwenkbar gelagert und enthält an ihrer Basis 16 zwei sich bezüglich der Drehachse 15 gegenüberliegende Gelenke 17 und 18, an denen jeweils ein Kreuzlenker 19 bzw. 20 eines Kreuzlenkergetriebes angelenkt ist. Die beiden Kreuzlenker 19. und 20 sind andererseits an einem Antriebslenker 21 in voneinander beabstandeten Gelenken 22 und 23 in Kreuzlenkeranordnung angelenkt, wobei das Gelenk 23 an dem einen Ende des Antriebslenkers 21 angeordnet ist, der an seinem anderen Ende in einem Gelenk 24 mit einem Schwinghebel 25 gekoppelt ist, der wiederum am Unterende der Lagerplatte 8 in einem Gelenk 26 schwenkbar angelenkt ist.

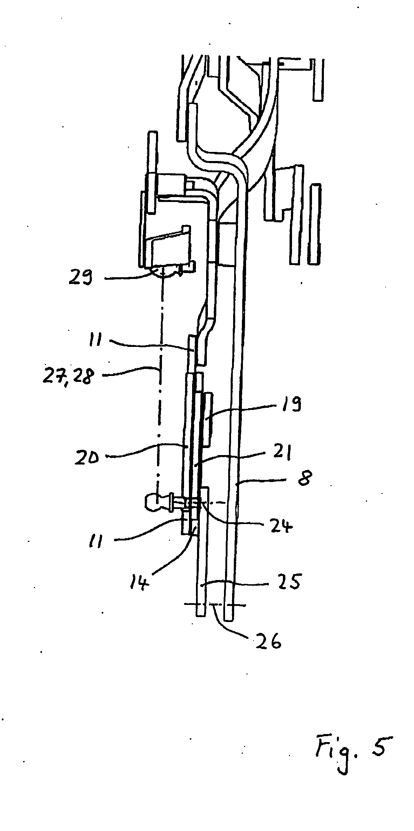

Alle Lenker sind als flache plattenförmige Bauteile gebildet, so dass die Verstellvorrichtung in Fahrzeugquerrichtung sehr schmal baut (siehe Fig. 5).

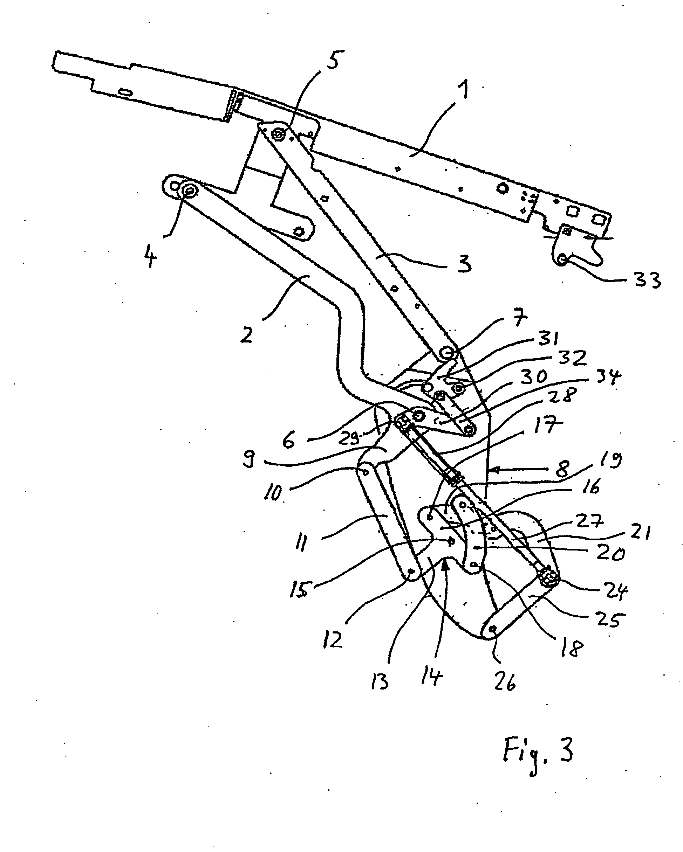

Als Antriebseinrichtung zum Verschwenken des Viergelenks ist eine Hydraulikzylindereinheit vorgesehen (nur in Fig. 3 dargestellt, ansonsten schematisch durch eine strichpunktierte Linie dargestellt), deren Kolbenstange 27 am Gelenk 24 mit dem Antriebslenker 21 gekoppelt ist und deren Zylinder 28 in einem Gelenk 29 an einem Übersetzungshebel 30 angelenkt ist, der in dem Gelenk 6 koaxial zum Hauptlenker 2 schwenkbar gelagert ist. Der Übersetzungshebel 30 ist Teil einer Riegelkinematik, mit der der Rahmen 1 in seiner Schließstellung an der Karosserie bzw. an der Lagerplatte 8 festlegbar und verriegelbar ist. Die Riegelkinematik enthält einen Schloßhaken 31, der in einer Schwenkachse 32 an der Lagerplatte 8 schwenkbar angefenkt ist und zum Riegeleingriff mit einem Riegelteil wie z. B. einem Riegelbolzen 33 vorgesehen ist, der am Hinterrandbereich des Rahmens 1 befestigt ist. Eine Koppel 34 verbindet in den Gelenken 35 und 36 den Schloßhaken 31 mit dem Übersetzungshebel 30, wobei das Gelenk 36 an einem sich über das Gelenk 6 hinauserstreckenden Abschnitt des Übersetzungshebels 30 angeordnet ist und der Abstand zwischen dem Gelenk 36 und dem die Schwenkachse bildenden Gelenk 6 ein Mehrfaches des Abstandes zwischen dem Gelenk 29 und dem Gelenk 6 ist.

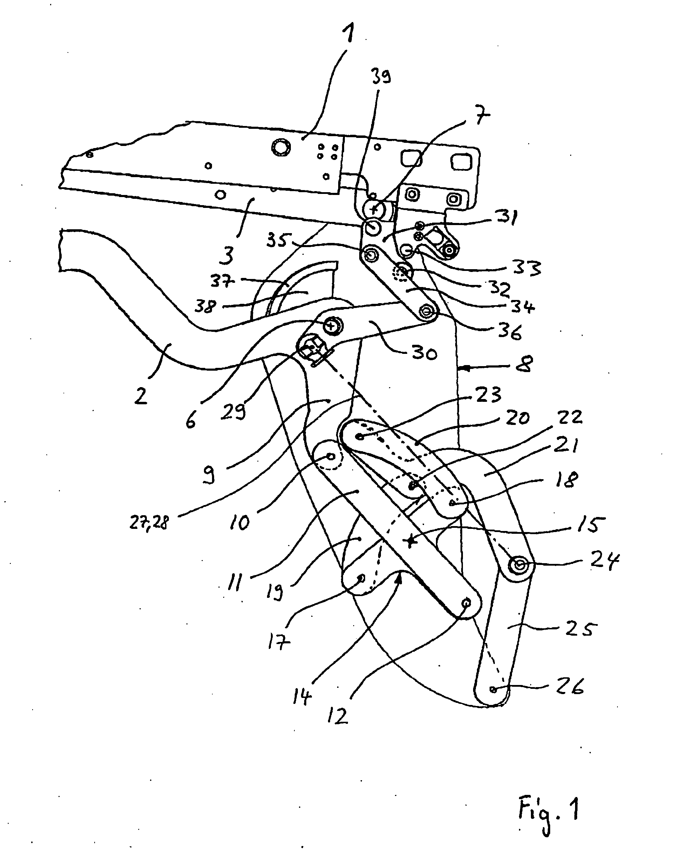

In der Schließstellung des Verdeckkastendeckels und des Rahmens 1 (siehe Fig. 1) ist die Kolbenstange 27 der Hydraulikzylindereinheit eingefahren und über den Antriebslenker 21 und das Kreuzlenkergetriebe ist die Kurbel 14 in eine Endstellung verschwenkt, in der die Längsachse der Koppelstange 11 im wesentlichen durch die Drehachse 15 der Kurbel 14 verläuft. Damit befindet sich die Koppelstange 11 an der Kurbel 14 in einer Totpunktstellung, in der eine vom Hauptlenker 2 auf die Koppelstange 11 eingeleitete Kraft keine Bewegung der Kurbel 14 erzeugt. Die Hydraulikzylindereinheit ist demnach in Schließstellung kraftentlastet.

Die drei Gelenke 22, 23 und 24 des Antriebslenkers 21 liegen beispielsweise in etwa auf einer Geraden, wobei jedoch der Antriebslenkers 21 zwischen den Gelenken 22 und 24 gekrümmt oder ausgebaucht ist, so dass in der in Fig. 1 dargestellten End- oder Schließstellung der Antriebslenkers 21 das das Gelenk 18 enthaltende Ende der Kurbel 14 platzsparend umgreift, da die Kurbel 14 und der Antriebslenker 21 platzsparend im wesentlichen in einer Schwenkebene angeordnet sind.

Die Riegelkinematik ist in einer Riegelstellung angeordnet und hält mit dem Schloßhaken 31 den Riegelbolzen 33 des Rahmens 1 verriegelt.

Zum vorderrandseitigen Hochschwenken des Verdeckkastendeckels wird die Hydraulikzylindereinheit betätigt und ihre Längenzunahme aufgrund der ausfahrenden Kolbenstange 27 bewirkt zunächst, dass der Übersetzungshebel 30 im Uhrzeigersinn (gemäß Fig. 1) verschwenkt wird und über die Koppel 34 der Schloßhaken 31 geöffnet wird, wobei der Riegelbolzen 33 freigegeben wird. Die anfängliche Expansion der Hydraulikzylindereinheit betätigt zunächst die Riegefkinematik, da hierfür eine vergleichsweise geringe Kraft erforderlich ist, wohingegen aufgrund des Gewichtes des Verdeckkastendeckels und des Rahmens 1 eine Verlagerung der Kurbel 14 bzw. des über die Kreuzlenker 19 und 20 angekoppelten Antriebslenkers 21 einen höheren Kraftaufwand erfordert.

Die unterschiedlichen Abstände der Gelenke 29 und 36 von der Schwenkachse 6 des Übersetzungshebels 30 bewirken eine Übersetzung des Stell- oder Entriegelweges, so dass eine geringe Längenzunahme der Hydraulikzylindereinheit zum Entriegeln der Riegelkinematik bzw. des Schloßhakens 31 ausreicht.

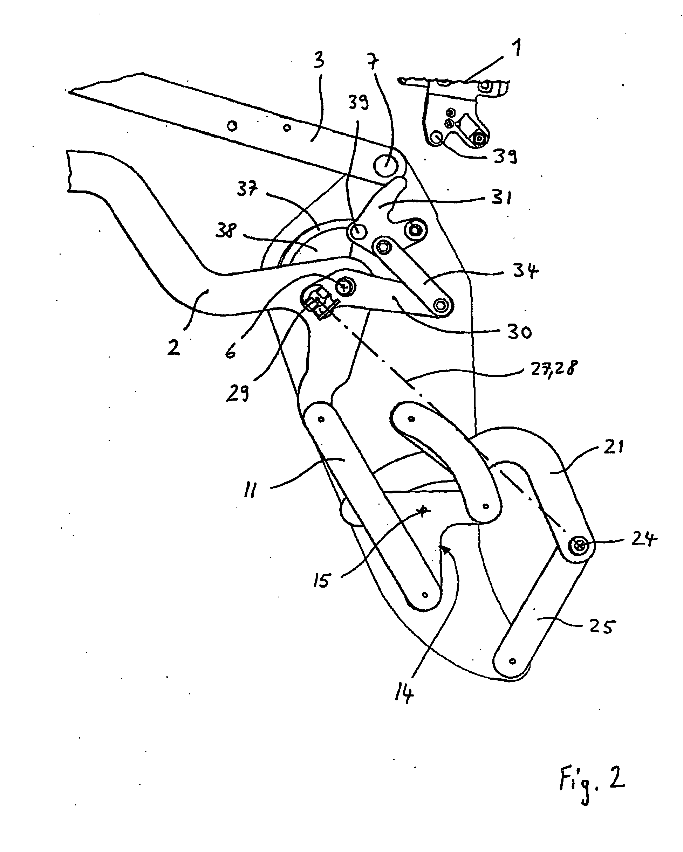

Bei entriegeltem Schloßhaken 31 liegt dieser oder ein anderes Bauteil der Riegelkinematik an einem Anschlag an, so dass das weitere Ausfahren der Kolbenstange 27 über das Gelenk 24 den Antriebslenker 21 in Öffnungsrichtung verstellt (Bewegung von Fig. 1 nach Fig. 2) und dieser über die beiden Kreuzlenker 19 und 20 die Kurbel 14 verschwenk. Über die zwischengeschaltete Koppelstange 11 wird die Hauptsäule 2 um ihre Lagerachse 6 verschwenkt, wobei die rotierende Kurbel 14 zunächst nur eine geringe Bewegung der Koppelstange 11 an dem Gelenk 10 und damit ein anfänglich langsames Verschwenken der Hauptsäule 2 bewirkt. Diese Untersetzung der Bewegungsgeschwindigkeit hat jedoch die Übertragung einer hohen Stell- oder Öffnungskraft auf den Hauptlenker 2 als gewünschten Nebeneffekt zur Folge.

Am Hauptlenker 2 ist im Bereich seiner Lagerachse 6 ein zur Lagerachse 6 konzentrisches Ringsegment 37 mittels einer am Hauptlenker 2 fest angebrachten Trägerplatte 38 derart befestigt, dass das Ringsegment 37 in der Stellung der Fig. 2 beginnt, einen vom Schloßhaken 31 seitlich gegen die Lagerplatte 8 hervorstehenden Stützbolzen 39 zu hintergreifen. Durch das Ringsegment 37 ist der Schloßhaken 31 gegen ein Verschwenken in Schließrichtung blockiert und als Folge davon ist das riegelseitige Ende der Hydraulikzylindereinheit ortsfest gehalten, auch wenn auf den sich öffnenden Verdeckkastendeckel bzw. Rahmen 1 eine unerwünschte Belastung oder Kraft einwirkt.

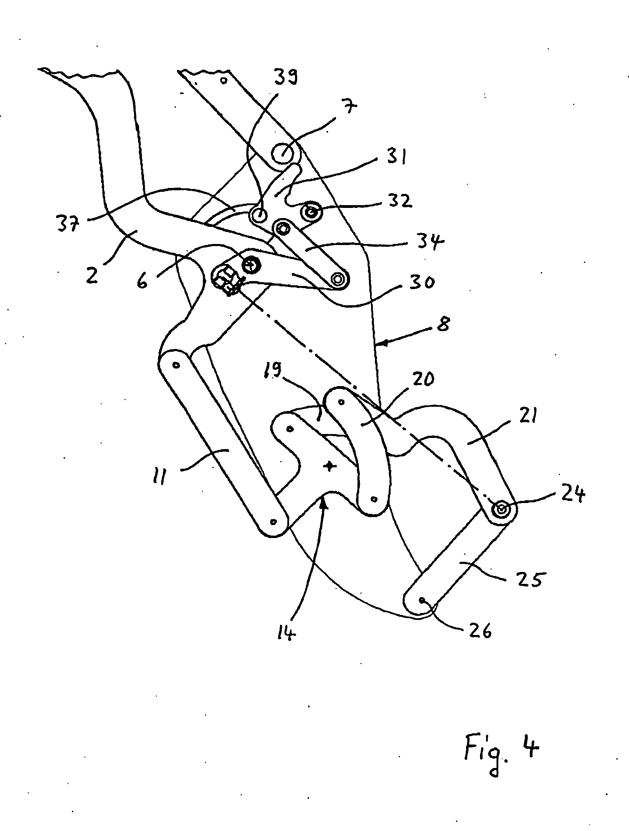

Das weitere Ausfahren der Kolbenstange 27 bewegt die Verstellvorrichtung in die in den Fig. 3 und 4 dargestellte Stellung, in der die Bewegung der Kolbenstange 27 aufgrund der zueinander annähernd rechtwinkligen Stellung des Armes 13 der Kurbel 14 und der Koppelstange 11 eine maximale Stellbewegung der Koppelstange 11 und damit eine maximale Verstellgeschwindigkeit des Hauptlenkers 2 erzeugt.

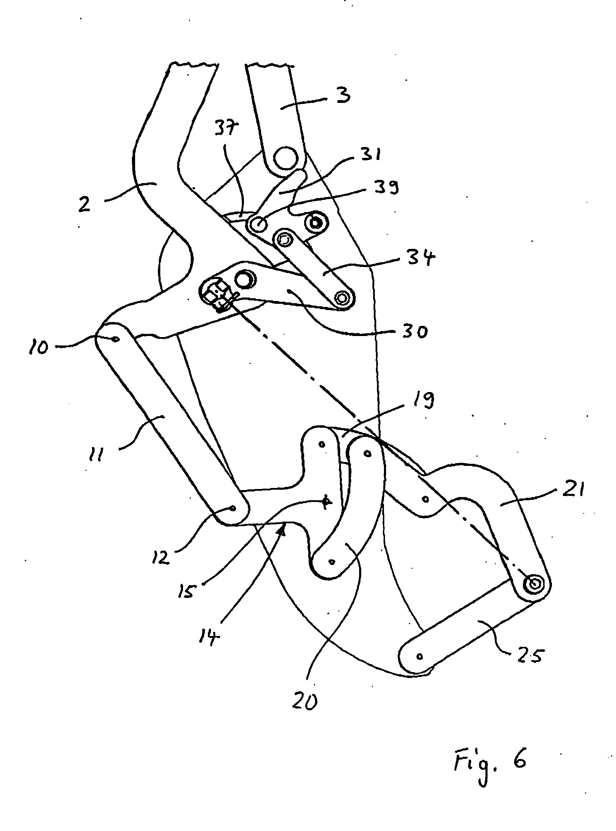

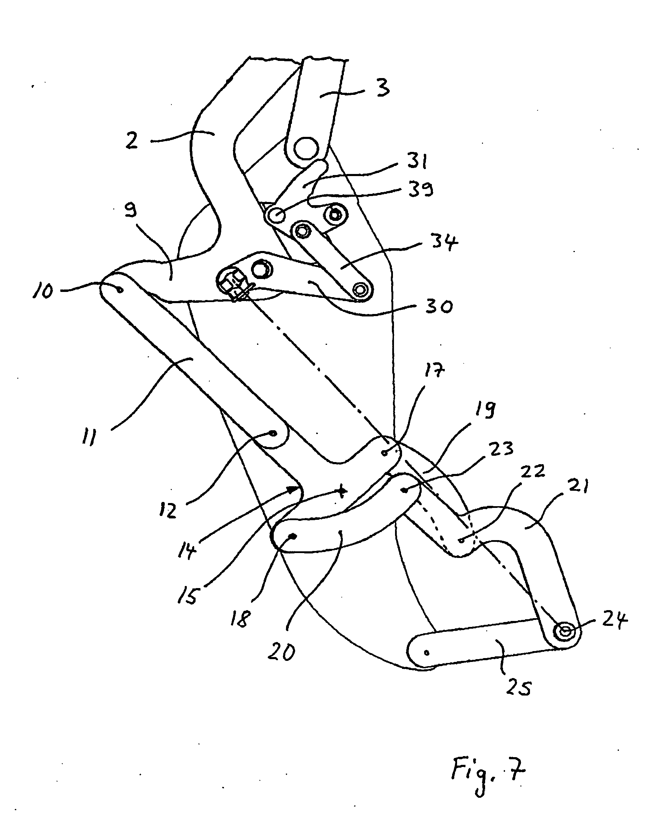

Im weiteren Öffnungsverlauf durchläuft die Kurbel 14 einen Schwenkwinkelbereich (eine beispielhafte Stellung ist in Fig. 6 dargestellt), in dem sich das am Arm 14 angeordnete Gelenk 12 der Verbindungsgeraden zwischen der Drehachse 15 der Kurbel 14 und dem Gelenk 10 an der Verlängerung 9 des Hauptlenkers 2 annähert. Die Geschwindigkeit der Verstellbewegung der Koppelstange 11 nimmt daher wieder deutlich ab, bis sie schließlich in der in Fig. 7 dargestellten Stellung zu Null wird. Die Koppelstange 11 und die Kurbel 14 befinden sich in der Bewegungsendstellung wieder in einer Totpunktstellung, in der eine Krafteinleitung von der Hauptsäule 2 auf die Koppelstange 11 keine Verstellung der Kurbel 14 bewirkt. Die Kurbel 14 ist somit um einen Schwenkwinkel von etwa 180° verschwenkt worden.

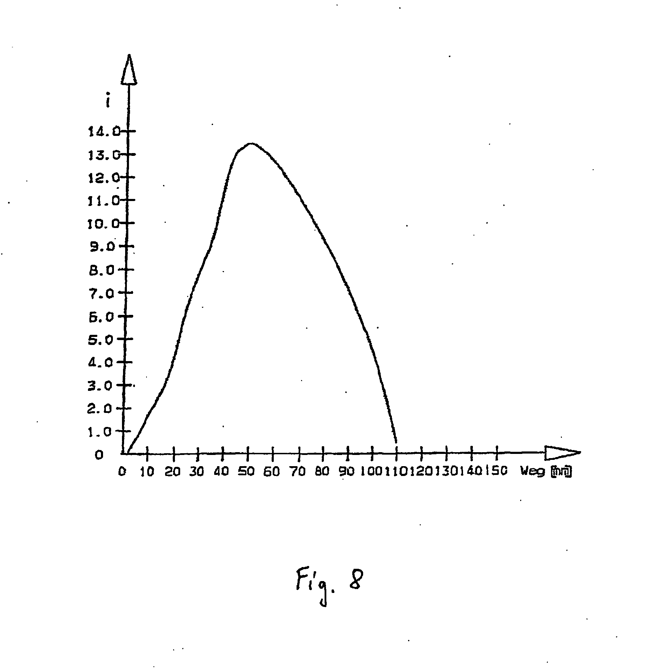

Mit dieser Verstellvorrichtung ist ein in Fig. 8 dargestellter Übersetzungsverlauf erzielbar. Die Abszisse des Diagramms zeigt den Bewegungsweg oder die Längenveränderung bzw. -zunahme der Hydraulikzylindereinheit zwischen der ersten Endstellung bzw. der Schließstellung des Verdeckkastendeckels und der zweiten Endstellung bzw. der Offenstellung des Verdeckkastendeckels, wobei ein Weg von Null der Stellung der Fig. 1 und der maximale Weg (110 mm) der Stellung der Fig. 7 entspricht. Die Ordinate gibt das jeweilige Übersetzungsverhältnis zwischen Eingangs- und Ausgangsbewegung an und repräsentiert damit auch den Geschwindigkeitsverlauf. Durch die erfindungsgemäße Verstellvorrichtung wird der Kraftverlauf optimiert und der Bewegungsweg der Hydraulikzylindereinheit verkürzt, wodurch auch die Verstellzeit verkürzt wird. Der Verdeckkastendeckel wird somit in seine beiden Endstellungen sanft bewegt, wobei eine hohe Stell- oder Abstützkraft bereit steht.

In der Endstellung gemäß Fig. 7 kann die Kurbel 14 auch um etwa 1 bis 3° über die Totpunktstellung hinaus verschwenkt sein, um eine sichere Verriegelung der Verstellvorrichtung bei geöffnetem Verdeckkastendeckel zu erreichen.

Das Schließen des Verdeckkastendeckels bzw. des Rahmens 1 erfolgt in entgegengesetztem Bewegungsablauf durch Kontraktion der Hydraulikzylindereinheit 27,28.

Die Hydraulikzylindereinheit 27, 28 kann in alternativer Gestaltung der Verstellvorrichtung statt in dem Gelenk 29 auch z. B. an dem Gelenk 6 oder einem anderen fahrzeugfesten Teil angebracht sein. Die Betätigung der Riegeleinrichtung bzw. des Schloßhakens 31 erfolgt dann über einen eigenen Antrieb oder mittels einer Bewegungskopplung mit einem anderen Teil der Kinematik.

### Bezugszeichenliste

| | | | |
|---|---|---|---|
| 1 | Rahmen | 21 | Antriebslenker |
| 2 | Hauptlenker | 22 | Gelenk |
| 3 | Hilfslenker | 23 | Gelenk |
| 4 | Gelenk | 24 | Gelenk |
| 5 | Gelenk | 25 | Schwinghebel |
| 6 | Gelenk | 26 | Gelenk |
| 7 | Gelenk | 27 | Kolbenstange |
| 8 | Lagerplatte | 28 | Zylinder |
| 9 | Verlängerung | 29 | Gelenk |
| 10 | Gelenk | 30 | Übersetzungshebel |
| 11 | Koppelstange | 31 | Schloßhaken |
| 12 | Gelenk | 32 | Schwenkachse |
| 13 | Arm | 33 | Riegelbolzen |
| 14 | Kurbel | 34 | Koppel |
| 15 | Drehachse | 35 | Gelenk |
| 16 | Basis | 36 | Gelenk |
| 17 | Gelenk | 37 | Ringsegment |
| 18 | Gelenk | 38 | Trägerplatte |
| 19 | Kreuzlenker | 39 | Stützbolzen |
| 20 | Kreuzlenker | | |

## Patentansprüche

1. Verstellvorrichtung eines bewegbaren Bauteils, insbesondere eines Verdeckkastendeckels eines Cabriolets, das mittels zumindest eines karosserieseitig angelenkten Lenkers (2) bewegbar gelagert ist, wobei zwischen dem Lenker (2) und einer Antriebseinheit der (27, 28) der Verstellvorrichtung ein Kreuzlenkergetriebe zwischengeschaltet ist,
**dadurch gekennzeichnet,**
**dass** der Lenker (2) über eine Koppelstange (11) mit einer drehbar gelagerten Kurbel (14) gekoppelt ist, die über zwei Kreuzlenker (19, 20) mit einem von der Antriebseinheit (27, 28) bewegbaren Antriebslenker (21) verbunden ist.

2. Verstellvorrichtung nach Anspruch 1,
**dadurch gekennzeichnet, dass** die Kurbel (14) um einen Drehwinkel von etwa 180° verschwenkbar ist.

3. Verstellvorrichtung nach Anspruch 1 oder 2,
**dadurch gekennzeichnet, dass** die Kurbel (14) zwischen den beiden Anlenkstellen (17, 18) der Kreuzlenker (19, 20) drehbar gelagert ist und einen seitlich abstehenden Arm (13) aufweist, an dem die Koppelstange (11) angelenkt ist.

4. Verstellvorrichtung nach einem der Ansprüche 1 bis 3,
**dadurch gekennzeichnet, dass** in der einen Endstellung und/oder in der anderen Endstellung des Bauteils (1) die Koppelstange (11) und die Kurbel (14) in einer Totpunktstellung angeordnet sind, in der die Kurbel (14) ihre Position beibehält, wenn eine Kraft von dem Bauteil (1) auf die Koppelstange (11) eingeleitet wird.

5. Verstellvorrichtung nach einem der Ansprüche 1 bis 4,
**dadurch gekennzeichnet, dass** der Antriebslenker (21) mit einem Schwinghebel (25) gekoppelt ist, der an einem ortsfesten Lagerteil (8) schwenkbar angelenkt ist.

6. Verstellvorrichtung nach einem der Ansprüche 1 bis 5,
**dadurch gekennzeichnet, dass** eine Hydraulikzylindereinheit (27, 28) als Antriebseinheit vorgesehen ist, die einerseits an dem Verbindungsgelenk (24) zwischen dem Schwinghebel (25) und dem Antriebslenker (21) angreift und andererseits zumindest zeitweise ortsfest abgestützt ist.

7. Verstellvorrichtung nach einem der Ansprüche 1 bis 6,
**dadurch gekennzeichnet, dass** sie kinematisch derart ausgelegt ist, dass bei im wesentlichen gleichbleibender Antriebsgeschwindigkeit der Antriebseinheit (27, 28) nahe der beiden Endstellungen des Bauteils (1) bzw. der Verstellvorrichtung der Lenker (2) mit einer geringen Verstellgeschwindigkeit und dazwischen mit höherer Geschwindigkeit verschwenkt wird.

8. Verstellvorrichtung nach einem der Ansprüche 1 bis 7,
**dadurch gekennzeichnet, dass** die Hydraulikzylindereinheit (27, 28) andererseits mit einer Riegeleinrichtung (31) zum Festlegen des Bauteils (1) in einer Endstellung, insbesondere in einer Offenstellung, verbunden ist, bei der anfänglichen Bewegung zunächst eine Entriegelungsbewegung ausführt und anschließend riegelseitig ortsfest abgestützt ist.

9. Verstellvorrichtung nach Anspruch 8,
**dadurch gekennzeichnet, dass** der Lenker (2) eine Riegelkurve (37) aufweist, die in Abhängigkeit von der Schwenkstellung des Lenkers (2) eine Bewegung der Riegeleinrichtung (31) blockiert.

10. Verstellvorrichtung nach einem der Ansprüche 1 bis 9,
**dadurch gekennzeichnet, dass** in Schließstellung die Koppelstange (11) gegenüber der Kurbel (14) in einer Übertotpunktstellung, Insbesondere etwa 2° bis 3° über die Totpunktstellung hinaus, angeordnet ist.

11. Verstellvorrichtung nach einem der Ansprüche 1 bis 10,
**dadurch gekennzeichnet, dass** eine Sperreinrichtung (31, 34) vorgesehen ist, die bei in Richtung der zweiten Endstellung bewegtem Bautell (1) eine Rückbewegung der Antriebseinheit (27, 28) verhindert.

## Claims

1. Adjusting mechanism for a movable component, in particular a folding top compartment cover of a convertible, which is mounted movably by means of at least one link (2) coupled on the bodywork side, wherein a cross link mechanism is connected between the link (2) and a drive unit (27, 28) of the adjusting mechanism, **characterized in that** the link (2) is coupled via a coupling rod (11) to a rotatably mounted crank (14) which is connected via two cross links (19, 20) to a drive link (21) movable by the drive unit (27, 28).

2. Adjusting mechanism according to Claim 1, **characterized in that** the crank (14) is pivotable about an angle of rotation of approximately 180°.

3. Adjusting mechanism according to Claim 1 or 2, **characterized in that** the crank (14) is mounted rotatably between the two coupling points (17, 18) of the cross links (19, 20) and has a laterally protruding arm (13) to which the coupling rod (11) is coupled.

4. Adjusting mechanism according to one of Claims 1 to 3, **characterized in that**, in the one end position and/or in the other end position of the component (1), the coupling rod (11) and the crank (14) are arranged in a dead centre position, in which the crank (14) retains its position when a force from the component (1) is introduced onto the coupling rod (11).

5. Adjusting mechanism according to one of Claims 1 to 4, **characterized in that** the drive link (21) is coupled to an oscillating lever (25) which is coupled pivotably to a positionally fixed bearing part (8).

6. Adjusting mechanism according to one of Claims 1 to 5, **characterized in that** a hydraulic cylinder unit (27, 28) is provided as the drive unit, said hydraulic cylinder unit acting at one end on the connecting joint (24) between the oscillating lever (25) and the drive link (21) and at the other end being at least temporarily supported in a positionally fixed manner.

7. Adjusting mechanism according to one of Claims 1 to 6, **characterized in that** said adjusting mechanism is kinematically configured in such a manner that, at a substantially uniform driving speed of the drive unit (27, 28) in the vicinity of the two end positions of the component (1) or of the adjusting mechanism, the link (2) is pivoted at a low adjusting speed and is pivoted at a higher speed in-between.

8. Adjusting mechanism according to one of Claims 1 to 7, **characterized in that** the hydraulic cylinder unit (27, 28) is connected at the other end to a locking device (31) for fixing the component (1) in an end position, in particular in an open position, and, during the initial movement, first of all executes an unlocking movement and subsequently is supported in a positionally fixed manner on the locking side.

9. Adjusting mechanism according to Claim 8, **characterized in that** the link (2) has a locking cam (37) which, depending on the pivoting position of the link (2), blocks a movement of the locking device (31).

10. Adjusting mechanism according to one of Claims 1 to 9, **characterized in that**, in the closed position, the coupling rod (11) is arranged in an over dead centre position, in particular approximately 2° to 3° beyond the dead centre position, in relation to the crank (14).

11. Adjusting mechanism according to one of Claims 1 to 10, **characterized in that** a blocking device (31, 34) is provided, said blocking device preventing the drive unit (27, 28) from moving back when the component (1) is moved in the direction of the second end position.

## Revendications

1. Dispositif de déplacement d'un composant pouvant être déplacé, en particulier d'un couvercle de compartiment à capote d'un cabriolet, qui est monté de manière à pouvoir être déplacé au moyen d'au moins une bielle (2) articulée du côté de la carrosserie, un mécanisme à bielles croisées étant interposé entre la bielle (2) et une unité d'entraînement (27, 28) du dispositif de déplacement,
**caractérisé en ce que**
la bielle (2) est accouplée à une manivelle (14) montée à rotation au moyen d'une barre d'accouplement (11), laquelle manivelle est reliée, au moyen de deux bielles croisées (19, 20), à une bielle d'entraînement (21) pouvant être déplacée par l'unité d'entraînement (27, 28).

2. Dispositif de déplacement selon la revendication 1,
**caractérisé en ce que** la manivelle (14) peut être pivotée d'un angle de rotation d'approximativement 180°.

3. Dispositif de déplacement selon la revendication 1 ou 2,
**caractérisé en ce que** la manivelle (14) est montée à rotation entre les deux points d'articulation (17, 18) des bielles croisées (19, 20) et comprend un bras (13) faisant saillie latéralement, sur lequel est articulée la barre d'accouplement (11).

4. Dispositif de déplacement selon l'une quelconque des revendications 1 à 3,
**caractérisé en ce qu'**à l'une des positions finales et/ou à l'autre position finale du composant (1), la barre d'accouplement (11) et la manivelle (14) sont disposées à une position de point mort à laquelle la manivelle (14) conserve sa position lorsqu'une force est transmise du composant (1) à la barre d'accouplement (11).

5. Dispositif de déplacement selon l'une quelconque des revendications 1 à 4,
**caractérisé en ce que** la bielle d'entraînement (21) est accouplée à un levier oscillant (25) qui est articulé de manière pivotante sur une partie de palier fixe (8).

6. Dispositif de déplacement selon l'une quelconque des revendications 1 à 5,
**caractérisé en ce qu'**une unité de vérin hydraulique (27, 28) est prévue en tant qu'unité d'entraînement qui, d'une part, vient en prise avec l'articulation de liaison (24) entre le levier oscillant (25) et la bielle d'entraînement (21) et, d'autre part, est supportée de manière fixe au moins par intermittence.

7. Dispositif de déplacement selon l'une quelconque des revendications 1 à 6,
**caractérisé en ce qu'**il est conçu d'un point de vue cinématique de telle sorte que, lorsque la vitesse d'entraînement de l'unité d'entraînement (27, 28) demeure essentiellement identique près des deux positions finales du composant (1) ou du dispositif de déplacement, la bielle (2) est pivotée avec une vitesse de déplacement faible et est pivotée avec une vitesse plus élevée entre ces deux positions finales.

8. Dispositif de déplacement selon l'une quelconque des revendications 1 à 7,
**caractérisé en ce que** l'unité de vérin hydraulique (27, 28) est d'autre part reliée à un dispositif de verrouillage (31) pour fixer le composant (1) en une position finale, en particulier en une position ouverte, et lors du mouvement initial, elle effectue tout d'abord un mouvement de déverrouillage et ensuite elle est supportée de manière fixe du côté du verrouillage.

9. Dispositif de déplacement selon la revendication 8,
**caractérisé en ce que** la bielle (2) comprend une courbe de verrouillage (37) qui bloque un mouvement du dispositif de verrouillage (31) en fonction de la position de pivotement de la bielle (2).

10. Dispositif de déplacement selon l'une quelconque des revendications 1 à 9,
**caractérisé en ce qu'**à la position de fermeture, la barre d'accouplement (11) est disposée, par rapport à la manivelle (14), à une position de dépassement du point mort, en particulier approximativement de 2° à 3° au-delà de la position de point mort.

11. Dispositif de déplacement selon l'une quelconque des revendications 1 à 10,
**caractérisé en ce qu'**un dispositif de blocage (31, 34) est prévu, lequel empêche un mouvement de retour de l'unité d'entraînement (27, 28) lorsque le composant (1) est déplacé en direction de la deuxième position finale.
